# EUROPEAN PATENT APPLICATION

(11) **EP 2 456 286 A1**
(43) Date of publication of application: **23.05.2012**
(21) Application number: 11155578.5
(22) Date of filing: 23.02.2011
(51) Int. Cl.: H05B 33/08

(54) **Random PWM dimming control for LED backlight**

(30) Priority: 19.11.2010 US 950424
(71) Applicant: AU Optronics Corporation, Hsin-Chu (TW)
(72) Inventor: Huang, Hung-Min, Hsin-Chu (TW); Chaing, Chia-Tsung, Hsin-Chu (TW)
(74) Representative: Lang, Christian

(57) **Abstract**

In one aspect of the invention, a driver for driving a backlight module having a plurality of LED strings includes a random frequency multiplexer for receiving one or more PWM signals and responsively outputting a plurality of random frequency signals, a PWM dimming controller electrically coupled to the random frequency multiplexer for receiving the plurality of random frequency signals and responsively outputting a plurality of driving signals to the plurality of LED strings to drive each of the plurality of LED strings, respectively, and a switching control circuit LX electrically coupled to the random frequency multiplexer for receiving the plurality of random frequency signals and responsively outputting a plurality of switching control signals to a boost converter to regulate duty cycle ON/OFF of each of the plurality of driving signals, respectively, so as to cause each of the plurality of LED strings to emit light of a desired brightness within a desired timing cycle.

## Description

### FIELD OF THE INVENTION

The present invention relates generally to a light emitting diode (LED) backlight, and more particularly, to driver and method for driving an LED backlight with random pulse-width modulation (PWM) dimming control.

### BACKGROUND OF THE INVENTION

The use of LED backlighting in liquid crystal displays (LCDs) is increasingly popular, since LEDs have substantially long operational lifetimes, superior lumen maintenance, color-rendering property with improved reliability, and low operating voltages with fast startup times and precise control over its intensity.

LEDs are current-driven devices in which light is produced via the recombination of injected holes and electrons in a semiconductor junction. Accordingly, the brightness of LEDs is typically controlled by controlling the forward current flowing through the device. One method for driving LEDs is known as a pulse-width modulation (PWM) dimming control method by which an LED is switched on and off at high frequency and the brightness is controlled by adjusting the duty cycle, the ratio of the time the LED is on to the switching period, hence the average forward current.

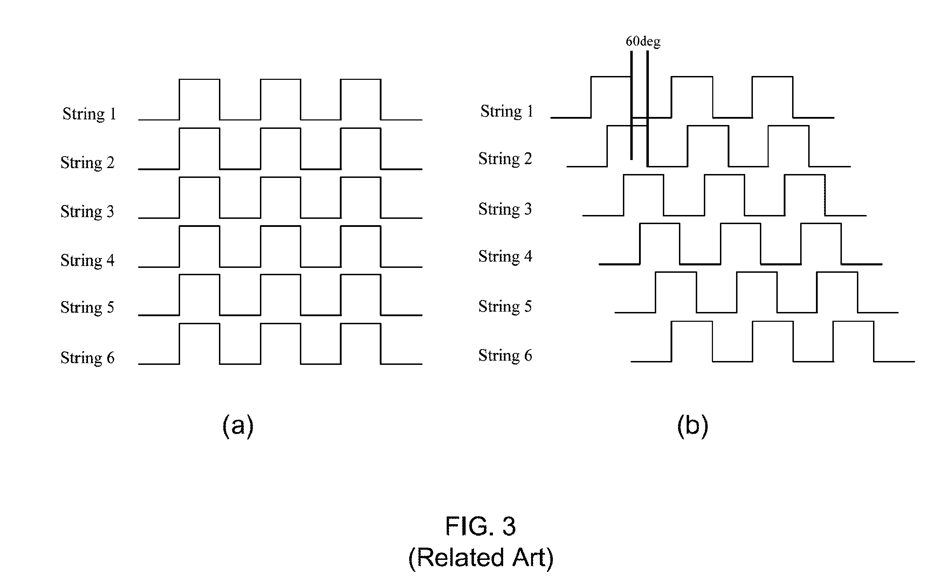

For a conventional LED driver IC, PWM dimming frequency is about 200 Hz; feedback frequency for each LED strings is also fixed; and phases of the PWN dimming signals driving each LED string are same, as shown in FIG. 3(a). When WWAN is detected along with a panel, there exist RF noises (at peak or hump) because of the coupling of the PWM dimming frequency with different frequency bands of the WWAN. Further, the coupling of the PWM dimming frequency with the frame refresh rate (about 60 Hz) also results in waving noises.

One of improvement methods is to shift the phases of the PWN dimming signals driving the LED strings to one another by 60 degrees, as shown in FIG. 3(b). However, neither significant reduction of the weaving noises nor significant improvement to the WWAN performance has been achieved.

Therefore, a heretofore unaddressed need exists in the art to address the aforementioned deficiencies and inadequacies.

### SUMMARY OF THE INVENTION

One of the objectives of the invention is to utilize a random frequency PWM dimming control to reduce RF noises and waving noises caused by the fixed frequency PWM dimming.

In one aspect, the present invention relates to a driver for driving a backlight module having a plurality of LED strings. Each LED string comprises a plurality of LEDs electrically coupled to one another in series. In one embodiment, the driver includes a random frequency multiplexer for receiving one or more PWM signals and responsively outputting a plurality of random frequency signals, a PWM dimming controller electrically coupled to the random frequency multiplexer for receiving the plurality of random frequency signals and responsively outputting a plurality of driving signals to the plurality of LED strings to drive each of the plurality of LED strings, respectively, and a switching control circuit LX electrically coupled to the random frequency multiplexer for receiving the plurality of random frequency signals and responsively outputting a plurality of switching control signals to a boost converter to regulate duty cycle ON/OFF of each of the plurality of driving signals, respectively, so as to cause each of the plurality of LED strings to emit light of a desired brightness within a desired timing cycle. Each of the plurality of driving signals driving the plurality of LED strings has a random frequency. Each of the plurality of switching control signals has a random frequency. In one embodiment, each of the plurality of driving signals in the timing cycle has an integrated area that is identical to each other.

Further, the driver may includes a plurality of feedback circuits electrically coupled between the plurality of LED strings and the PWM dimming controller for monitoring the brightness of light emitted from each LED string, respectively, where each of the plurality of feedback circuits has a random frequency.

In one embodiment, the duty cycle of each of the plurality of driving signals is dynamically modulated according to a corresponding feedback circuit from the corresponding LED string. In another embodiment, the duty cycle of each of the plurality of driving signals is dynamically modulated according to a dynamic contrast ratio (DCR) of a liquid crystal display (LCD) using the backlight module. In yet another embodiment, the duty cycle of each of the plurality of driving signals is dynamically modulated according to a high dynamic contrast ratio (HDR) of an LCD using the backlight module.

In another aspect, the present invention relates to a driver for driving a backlight module having a plurality of LED strings, where each LED string comprises a plurality of LEDs electrically coupled to one another in series. In one embodiment, the driver includes a random frequency multiplexer for receiving one or more PWM signals and responsively outputting a plurality of random frequency signals, and an LED driver having a PWM dimming controller and a switching control circuit LX, electrically coupled to the random frequency multiplexer, such that in operation, the PWM dimming controller responsively outputs a plurality of driving signals to the plurality of LED strings to drive each of the plurality of LED strings, respectively, and the switching control circuit LX responsively outputs a plurality of switching control signals to a boost converter to regulate duty cycle ON/OFF of each of the plurality of driving signals, respectively, so as to cause each of the plurality of LED strings to emit light of a desired brightness within a desired timing cycle, where each of the plurality of driving signals driving the plurality of LED strings has a random frequency, and each of the plurality of switching control signals has a random frequency. Further, each of the plurality of driving signals in the timing cycle has an integrated area that is identical to each other.

In one embodiment, the driver further comprises plurality of feedback circuits electrically coupled between the plurality of LED strings and the PWM dimming controller for monitoring the brightness of light emitted from each LED string, respectively, where each of the plurality of feedback circuits has a random frequency. In another embodiment, the duty cycle of each of the plurality of driving signals is dynamically modulated according to a DCR of an LCD using the backlight module. In yet another embodiment, the duty cycle of each of the plurality of driving signals is dynamically modulated according to an HDR of an LCD using the backlight module.

In yet another aspect, the present invention relates to a driver for driving a backlight module having a plurality of LED strings, where each LED string comprises a plurality of LEDs electrically coupled to one another in series. In one embodiment, the driver includes a random frequency multiplexer configured to generate a plurality of random frequency signals, such that the plurality of LED strings are driven by a plurality of driving signals, respectively, to emit light of a desired brightness within a desired timing cycle, where the plurality of driving signals are associated with the plurality of random frequency signals, where duty cycle ON/OFF of each of the plurality of driving signals is regulated by one of a plurality of switching control signals associated with the plurality of random frequency signals, each of the plurality of driving signals having a random frequency, and each of the plurality of switching control signals has a random frequency.

In one embodiment, each of the plurality of driving signals in the timing cycle has an integrated area that is identical to each other.

In one embodiment, the driver further comprises plurality of feedback circuits electrically coupled between the plurality of LED strings and the PWM dimming controller for monitoring the brightness of light emitted from each LED string, respectively, where each of the plurality of feedback circuits has a random frequency. In one embodiment, the duty cycle of each of the plurality of driving signals is dynamically modulated according to a corresponding feedback circuit from the corresponding LED string. In another embodiment, the duty cycle of each of the plurality of driving signals is dynamically modulated according to a DCR of an LCD using the backlight module. In yet another embodiment, the duty cycle of each of the plurality of driving signals is dynamically modulated according to an HDR of an LCD using the backlight module.

Further, the driver includes an LED driver having a PWM dimming controller and a switching control circuit LX, electrically coupled to the random frequency multiplexer, such that in operation, the PWM dimming controller responsively outputs the plurality of driving signals to the plurality of LED strings to drive each of the plurality of LED strings, respectively, and the switching control circuit LX responsively outputs the plurality of switching control signals to a boost converter to regulate duty cycle ON/OFF of each of the plurality of driving signals, respectively, so as to cause each of the plurality of LED strings to emit light of a desired brightness within a desired timing cycle.

In a further aspect, the present invention relates to a method for driving a backlight module having a plurality of LED strings. In one embodiment, the method includes the steps of generating a plurality of random frequency signals responsive to one or more PWM signals, generating a plurality of driving signals that is associated with the plurality of random frequency signals, regulating duty cycle ON/OFF of each of the plurality of driving signals, respectively, by a plurality of switching control signals that is associated with the plurality of random frequency signals, and driving the plurality of LED strings with the plurality of regulated driving signals, respectively, so as to cause each of the plurality of LED strings to emit light of a desired brightness within a desired timing cycle, where each of the plurality of driving signals has a random frequency, and each of the plurality of switching control signals has a random frequency.

In one embodiment, each of the plurality of driving signals in the timing cycle has an integrated area that is identical to each other.

Further, the method includes the steps of monitoring an brightness of each LED string as a feedback, and dynamically modulating the duty cycle of each of the plurality of driving signals according to the feedback from the corresponding LED string.

In one embodiment, the method further comprises the step of dynamically modulating the duty cycle of each of the plurality of driving signals according to the DCR of an LCD using the backlight module, which is performed by calculating an average gradescale of each frame of an image being displayed, extracting corresponding backlight duty and data compensation associated with the average gradescale from a time control driver (TCON), and modifying the duty cycle of each of the plurality of driving signals according to the corresponding backlight duty and data compensation so as to adjust the backlight dimming level and compensation pixel data responsively.

In another embodiment, the method includes the step of dynamically modulating the duty cycle of each of the plurality of driving signals according to an HDR of an LCD using the backlight module, which is performed by partitioning the LCD into a plurality of regions, calculating average gradescales of each frame of an image being displayed in the plurality of regions, extracting corresponding backlight duty and data compensation associated with the average gradescales from a TCON, and modifying the duty cycle of each of the plurality of driving signals according to the corresponding backlight duty and data compensation so as to adjust the backlight dimming level and compensation pixel data responsively.

In one embodiment, the plurality of random frequency signals are generated by a random frequency multiplexer.

These and other aspects of the present invention will become apparent from the following description of the preferred embodiment taken in conjunction with the following drawings, although variations and modifications therein may be affected without departing from the spirit and scope of the novel concepts of the disclosure.

### BRIEF DESCRIPTION OF THE DRAWINGS

The accompanying drawings illustrate one or more embodiments of the invention and together with the written description, serve to explain the principles of the invention. Wherever possible, the same reference numbers are used throughout the drawings to refer to the same or like elements of an embodiment, and wherein:
FIG. 1 shows schematically a driver for driving a backlight module having a plurality of LED strings according to one embodiment of the present invention;
FIG. 2 shows schematically PWM signals for driving a backlight module having a plurality of LED strings according to one embodiment of the present invention; and
FIG. 3 shows schematically two waveforms (a) and (b) of conventional PWM signals for driving a backlight module having a plurality of LED strings.

### DETAILED DESCRIPTION OF THE INVENTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. As used herein, the singular forms "a", "an" and "the" are intended to include the plural forms as well, unless the context clearly indicates otherwise. As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated. It will be further understood that the terms "comprises" and/or "comprising," or "includes" and/or "including" or "has" and/or "having" when used in this specification, specify the presence of stated features, regions, integers, steps, operations, elements, and/or components, but do not preclude the presence or addition of one or more other features, regions, integers, steps, operations, elements, components, and/or groups thereof.

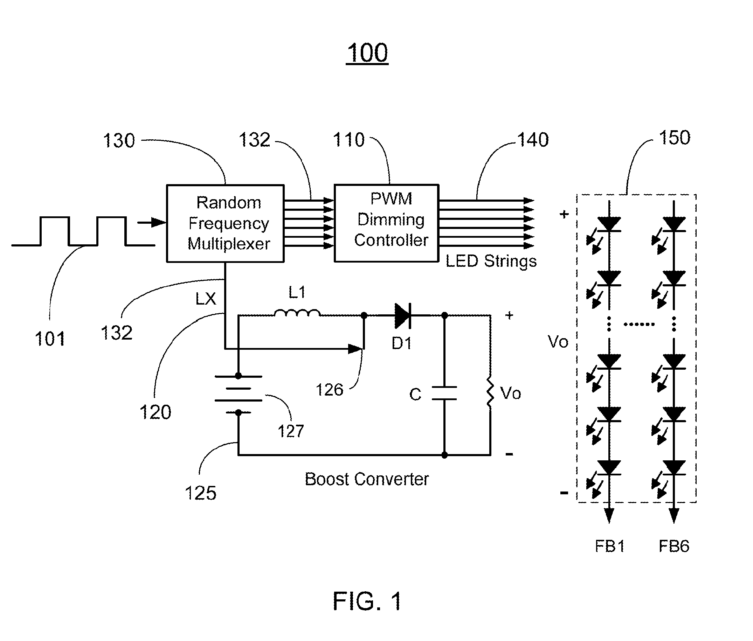

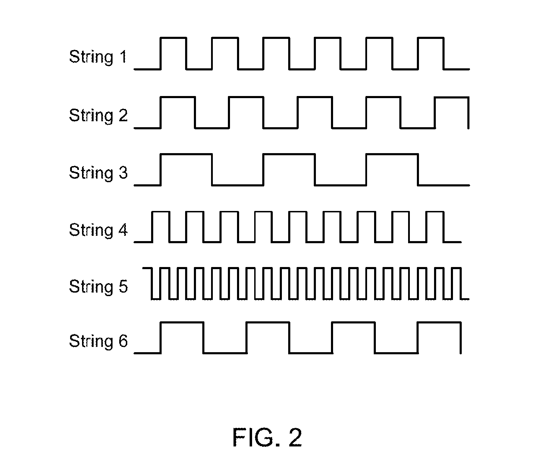

The description will be made as to the embodiments of the present invention in conjunction with the accompanying drawings of FIGS. 1 and 2. In accordance with the purposes of this invention, as embodied and broadly described herein, this invention, in one aspect, relates to a driver for driving an LED backlight with random PWM dimming control, and a method of driving same.

Referring to FIG. 1, a driver 100 for driving a backlight module is shown according to one embodiment of the present invention. The LED backlight module may have an array of LEDs arranged to illuminate the array of pixel elements of an LCD. The individual LEDs of the array may be arranged in groups. Each group of LEDs may have at least one LED that produces each of a set of colors. An LED backlight module that emits "white" light may have a plurality of groups of LEDs, and each group of LEDs may have a red LED, a green LED, and a blue LED. The red light produced by the red LED, the green light produced by the green LED, and blue light produced by the blue LED may combine to produce an approximately white light. In the exemplary embodiment shown in FIG. 1, the LEDs are arranged in LED strings 150. Each LED string 150 has a plurality of LEDs electrically coupled to one another in series.

The driver 100 includes a PWM dimming controller 110, a switching control circuit LX 120 and a random frequency multiplexer 130.

The PWM dimming controller 110 is configured to provide a plurality of driving signals 140 to the plurality of LED strings 150 for driving each of the plurality of LED strings 150, respectively.

The switching control circuit LX 120 is electrically coupled to a boost converter 125 and configured to regulate duty cycle ON/OFF of the plurality of driving signals 140 so as to adjust the brightness of each LED string 150. The boost converter 125 is a standard boost converter including an energy storage unit 127, a switch 126 electrically coupled to the switching control circuit LX 120, an inductor L1 electrically coupled between the energy storage element 127 and the switch 126, a diode D 1 electrically coupled between the switch 126 and the positive output (+), and a capacitor C electrically coupled between the negative output port (-) energy storage element 127 and the positive output (+).

The random frequency multiplexer 130 is electrically coupled to the PWM dimming controller 110 and the switching control circuit LX 120 and configured to receive a PWM signal 101 and responsively outputting a plurality of random frequency signals 132 to the PWM dimming controller 110 and the switching control circuit LX 120. The receiving PWM signal 101 is a conventional PWM signal.

For such a configuration as show in FIG. 1, each of the plurality of driving signals 140 regenerated by the PWM dimming controller 110 responsive to the plurality of random frequency signals 132 received from random frequency multiplexer 130 has a random frequency, as shown in FIG. 2 for example. Further, the switching control circuit LX 120 receives the plurality of random frequency signals 132 and responsively outputs a plurality of switching control signals to a boost converter 125 to regulate duty cycle ON/OFF of each of the plurality of driving signals 140, respectively, so as to cause each of the plurality of LED strings 150 to emit light of a desired brightness within a desired timing cycle. Each of the plurality of switching control signals has a random frequency.

As shown in FIG. 2, according to the present invention, each PWM signal, e.g., String 1, String 2, ..., String 6, has a random frequency. In addition, each PWM signal, String 1, String 2, ..., String 6, has an integrated area in the timing cycle that is identical to each other.

As shown in FIG. 1, each LED strings is respectively monitored as a corresponding feedback, such as FB1, ..., FB6, for example. These feedbacks FB1, ..., FB6 are used to dynamically modulate the duty cycle of each driving signal 140 is dynamically modulated accordingly.

Further, according to the invention, the duty cycle is each of the plurality of driving signals may dynamically be modulated according to a DCR or an HDR of an LCD using the backlight module.

Additionally, one embodiment of the driver may have a random frequency multiplexer for receiving one or more PWM signals and responsively outputting a plurality of random frequency signals and an LED driver. The LED driver has an PWM dimming controller and a switching control circuit LX, electrically coupled to the random frequency multiplexer, such that in operation, the PWM dimming controller responsively outputs a plurality of driving signals to the plurality of LED strings to drive each of the plurality of LED strings, respectively, and the switching control circuit LX responsively outputs a plurality of switching control signals to a boost converter to regulate duty cycle ON/OFF of each of the plurality of driving signals, respectively, so as to cause each of the plurality of LED strings to emit light of a desired brightness within a desired timing cycle, wherein each of the plurality of driving signals driving the plurality of LED strings has a random frequency.

One aspect of the present invention also provides a method for driving a backlight module having a plurality of LED strings. The method includes generating a plurality of random frequency signals responsive to one or more PWM signals, generating a plurality of driving signals that are associated with the plurality of random frequency signals, regulating duty cycle ON/OFF of each of the plurality of driving signals, respectively, by a plurality of switching control signals that are associated with the plurality of random frequency signals, and driving the plurality of LED strings with the plurality of regulated driving signals, respectively, so as to cause each of the plurality of LED strings to emit light of a desired brightness within a desired timing cycle, where each of the plurality of driving signals has a random frequency, and each of the plurality of switching control signals has a random frequency. Additionally, each of the plurality of driving signals in the timing cycle has an integrated area that is identical to each other.

Further, the method includes the steps of monitoring a brightness of each LED string as a feedback, and dynamically modulating the duty cycle of each of the plurality of driving signals according to the feedback from the corresponding LED string.

In one embodiment, the method further comprises the step of dynamically modulating the duty cycle of each of the plurality of driving signals according to the DCR of an LCD using the backlight module, which is performed by calculating an average gradescale of each frame of an image being displayed, extracting corresponding backlight duty and data compensation associated with the average gradescale from a time control driver (TCON), and modifying the duty cycle of each of the plurality of driving signals according to the corresponding backlight duty and data compensation so as to adjust the backlight dimming level and compensation pixel data responsively.

In another embodiment, the method includes the step of dynamically modulating the duty cycle of each of the plurality of driving signals according to an HDR of an LCD using the backlight module, which is performed by partitioning the LCD into a plurality of regions, calculating average gradescales of each frame of an image being displayed in the plurality of regions, extracting corresponding backlight duty and data compensation associated with the average gradescales from a TCON, and modifying the duty cycle of each of the plurality of driving signals according to the corresponding backlight duty and data compensation so as to adjust the backlight dimming level and compensation pixel data responsively.

In one embodiment, the plurality of random frequency signal is generated by a random frequency multiplexer.

Briefly, the present invention, among other things, recites drivers and methods for driving a backlight module having a plurality of LED strings that utilize a random frequency PWM dimming control to reduce RF noises and waving noises caused by the fixed frequency PWM dimming.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

## Claims

1. A driver for driving a backlight module having a plurality of light emitting diode (LED) strings, comprising:
a random frequency multiplexer configured to generate a plurality of random frequency signals, such that the plurality of LED strings are driven by a plurality of driving signals, respectively, to emit light of a desired brightness within a desired timing cycle, wherein the plurality of driving signals are associated with the plurality of random frequency signals, wherein duty cycle ON/OFF of each of the plurality of driving signals is regulated by one of a plurality of switching control signals associated with the plurality of random frequency signals, and wherein each of the plurality of driving signals having a random frequency.

2. The driver of claim 1, wherein each of the plurality of switching control signals has a random frequency.

3. The driver of claim 1, wherein each of the plurality of driving signals in the timing cycle has an integrated area that is identical to each other.

4. The driver of claim 1, further comprising a plurality of feedback circuits electrically coupled to the plurality of LED strings for monitoring the brightness of light emitted from each LED string, respectively, wherein each of the plurality of feedback circuits has a random frequency.

5. The driver of claim 4, wherein the duty cycle of each of the plurality of driving signals is dynamically modulated according to a corresponding feedback circuit from the corresponding LED string.

6. The driver of claim 5, wherein the duty cycle of each of the plurality of driving signals is dynamically modulated according to a dynamic contrast ratio (DCR) of a liquid crystal display (LCD) using the backlight module.

7. The driver of claim 5, wherein the duty cycle of each of the plurality of driving signals is dynamically modulated according to a high dynamic contrast ratio (HDR) of an LCD using the backlight module.

8. The driver of claim 1, further comprising an LED driver having a pulse-width modulation (PWM) dimming controller and a switching control circuit LX, electrically coupled to the random frequency multiplexer, such that in operation, the PWM dimming controller responsively outputs the plurality of driving signals to the plurality of LED strings to drive each of the plurality of LED strings, respectively, and the switching control circuit LX responsively outputs the plurality of switching control signals to a boost converter to regulate duty cycle ON/OFF of each of the plurality of driving signals, respectively, so as to cause each of the plurality of LED strings to emit light of a desired brightness within a desired timing cycle.

9. A method for driving a backlight module having a plurality of light emitting diode (LED) strings, comprising the steps of:
(a) generating a plurality of random frequency signals responsive to one or more pulse-width modulation (PWM) signals;
(b) generating a plurality of driving signals that are associated with the plurality of random frequency signals;
(c) regulating duty cycle ON/OFF of each of the plurality of driving signals, respectively, by a plurality of switching control signals that are associated with the plurality of random frequency signals; and
(d) driving the plurality of LED strings with the plurality of regulated driving signals, respectively, so as to cause each of the plurality of LED strings to emit light of a desired brightness within a desired timing cycle,
wherein each of the plurality of driving signals has a random frequency, and wherein each of the plurality of switching control signals has a random frequency.

10. The method of claim 9, wherein each of the plurality of driving signals in the timing cycle has an integrated area that is identical to each other.

11. The method of claim 9, further comprising the steps of:
(a) monitoring an brightness of each LED string as a feedback; and
(b) dynamically modulating the duty cycle of each of the plurality of driving signals according to the feedback from the corresponding LED string.

12. The method of claim 11, further comprising the step of:
dynamically modulating the duty cycle of each of the plurality of driving signals according to the dynamic contrast ratio (DCR) of a liquid crystal display (LCD) using the backlight module.

13. The method of claim 12, wherein the dynamically modulating step comprises the steps of:
(a) calculating an average gradescale of each frame of an image being displayed;
(b) extracting corresponding backlight duty and data compensation associated with the average gradescale from a time control driver; and
(c) modifying the duty cycle of each of the plurality of driving signals according to the corresponding backlight duty and data compensation so as to adjust the backlight dimming level and compensation pixel data responsively.

14. The method of claim 11, further comprising the step of:
dynamically modulating the duty cycle of each of the plurality of driving signals according to a high dynamic contrast ratio (HDR) of an LCD using the backlight module.

15. The method of claim 14, wherein the dynamically modulating step comprises the steps of:
(a) partitioning the LCD into a plurality of regions;
(b) calculating average gradescales of each frame of an image being displayed in the plurality of regions;
(c) extracting corresponding backlight duty and data compensation associated with the average gradescales from a time control driver; and
(d) modifying the duty cycle of each of the plurality of driving signals according to the corresponding backlight duty and data compensation so as to adjust the backlight dimming level and compensation pixel data responsively.
